# EUROPEAN PATENT APPLICATION

(11) **EP 4 250 416 A2**
(43) Date of publication of application: **27.09.2023**
(21) Application number: 23164068.1
(22) Date of filing: 24.03.2023
(51) Int. Cl.: H01M 10/04

(54) **BATTERY CELL PRESSING MODULE AND CHARGE/DISCHARGE APPARATUS FOR SECONDARY BATTERY HAVING THE SAME**

(30) Priority: 25.03.2022 KR 20220037424; 25.03.2022 KR 20220037423; 25.03.2022 KR 20220037418
(71) Applicant: WONIK PNE CO., LTD., Suwon-si, Gyeonggi-do 16648 (KR)
(72) Inventor: KIM, Byunghum, 16648 Gyeonggi-do (KR); KIM, Hyoungjoong, 16648 Gyeonggi-do (KR); HAN, Woosik, 16648 Gyeonggi-do (KR); LEE, Jeongmok, 16648 Gyeonggi-do (KR)
(74) Representative: Zimmermann, Tankred Klaus

(57) **Abstract**

Proposed are a cell pressing module and an apparatus for charging and discharging a secondary battery, the apparatus having the cell pressing module. The cell pressing module includes a pressing plate pressing against a battery cell, and a movement guiding unit in which a movement guiding hole into which a plate moving shaft is inserted by passing-through is formed, the movement guiding unit being combined with both sides of the pressing plate, wherein the pressing plate is configured to be detachably attached to the movement guiding unit.

## Description

### [Technical Field]

The present disclosure relates to a cell pressing module and an apparatus for charging and discharging a secondary battery, the apparatus having the cell pressing module and, more particularly, to a cell pressing module capable of being simply replaced, and an apparatus for charging and discharging a secondary battery, the apparatus having the cell pressing module.

### [Background Art]

Secondary batteries are also widely used as an electric power source for driving an electric vehicle, as well as a mobile device, such as a portable phone, a notebook computer, or a camcorder. Particularly, the use of lithium secondary batteries is rapidly increased because it has advantages, such as a high operating voltage and a high energy density per unit weight.

Normally, secondary batteries, such as lithium batteries and lithium-polymer batteries, undergo varies processes, such as an aging process, a charging and discharging process, an open circuit voltage (OCV) inspection process, an internal resistance (IR) inspection process, and a grading process, at a manufacturing factory before shipment. Among these, the charging and discharging process is a critical process that determines quality of a secondary battery produced.

The process of charging and discharging the secondary battery is performed in an apparatus for charging and discharging a secondary battery.

The apparatus for charging and discharging the secondary battery includes a plurality of pressing plates. In a state where a battery cell is inserted, for charging and discharging, between each of the plurality of pressing plates, the pressing plate presses against the battery cell with a predetermined pressure.

In the state where the battery cell is pressed by the pressing plate, an electrode lead gripper module applies electric current to an electrode lead provided on the battery cell, and thus performs the process of charging and discharging the battery cell. The apparatus for charging and discharging the secondary battery performs charging and discharging of the battery cell in temperature and pressure ranges that are required in such a manner that activation of the battery cell is enhanced.

A movement guiding hole is formed in both end potions of the pressing plate pressing against the battery cell. A plate moving shaft that connects a first support frame and a second support frame, which are spaced a predetermined distance apart, to each other is inserted into the movement guiding hole by passing-through. Accordingly, the pressing plate may be moved along a lengthwise direction of a plate moving shaft while the first pressing unit and the second pressing unit press against the pressing plate. This pressing plate in the related art has an integrated structure. Thus, when the pressing plate in the related art is damaged, there occurs a problem in that it is difficult to perform an operation of replacing the damaged pressing plate.

For example, the operation of replacing the damaged pressing plate is briefly described as follows. First, the plate moving shaft that connects the first support frame and the second support frame to each other are disassembled. Next, all pressing plates that are arranged before the damaged pressing plate have to be separated from the plate moving shaft. Lastly, the damaged pressing plate is replaced, and then the separated pressing plates have to be recombined with the plate moving shaft by being inserted thereinto. As described above, it is difficult to perform the operation of replacing the pressing plate in the apparatus for charging and discharging the secondary battery in the related art.

Therefore, there is a need to perform research and development on various apparatuses for charging and discharging the secondary battery, in which the pressing plate is capable of being simply replaced.

### [Summary of Invention]

### [Technical Problem]

An object of the present disclosure is to provide a cell pressing module capable of being easily replaced and an apparatus for charging and discharging a secondary battery, the apparatus having the cell pressing module.

### [Solution to Problem]

In order to accomplish the above-mentioned object, according to an aspect of the present disclosure, there is provided a cell pressing module including: a pressing plate pressing against a battery cell; a movement guiding unit in which a movement guiding hole into which a plate moving shaft is inserted by passing-through is formed, the movement guiding unit being combined with both sides of the pressing plate; and a roller assembly on which a movement roller coming into contact with the plate moving shaft is provided, the roller assembly being combined with one-side and other-side surfaces of the movement guiding unit.

In order to accomplish the above-mentioned object, according to another aspect of the present disclosure, there is provided a cell pressing module including: a pressing plate pressing against a battery cell; and a movement guiding unit in which a movement guiding hole into which a plate moving shaft is inserted by passing-through is formed, the movement guiding unit being combined with both sides of the pressing plate, wherein the pressing plate is configured to be detachably attached to the movement guiding unit],

According to still another aspect of the present disclosure, there is provided an apparatus for charging and discharging a secondary battery, the apparatus having the cell pressing module,

### [Advantageous Effects of Invention]

The cell pressing module according to the present disclosure, which is described above, and the apparatus for charging and discharging a secondary battery, the apparatus having the cell pressing module, have the following effects.

According to the present disclosure, the pressing plate is configured to be detachably attached to the movement guiding unit. Therefore, an operator can simply replace a damaged pressing plate.

The present disclosure is not limited to the effects mentioned above, and it would be understood that any other effect is possibly inferred from Description of Embodiments or constituent elements recited in the claims.

### [Brief Description of Drawings]

FIG. 1 is a perspective view illustrating an apparatus for charging and discharging a secondary battery according to embodiments of the present disclosure.
FIG. 2 is a view illustrating the apparatus for charging and discharging a secondary battery according to the embodiments of the present disclosure, when viewed from above.
FIG. 3 is a view illustrating the apparatus for charging and discharging a secondary battery according to the embodiments of the present disclosure, when viewed from front.
FIG. 4 is a perspective view illustrating a cell pressing module and an electrode lead gripper module according to the embodiments of the present disclosure.
FIG. 5 is an exploded perspective view illustrating the cell pressing module according to the embodiments of the present disclosure.
FIG. 6 is a view illustrating a roller assembly combined with a movement guiding unit according to the embodiments of the present disclosure.
FIG. 7 is an exploded perspective view illustrating the roller assembly separated from the movement guiding unit according to the present disclosure.
FIG. 8 is a perspective view illustrating the roller assembly according to the embodiments of the present disclosure.
FIG. 9 is an exploded perspective view illustrating the movement guiding unit and a roller assembly according to embodiments of the present disclosure.
FIG. 10 is an exploded perspective view illustrating the movement guiding unit and a pressing plate according to the embodiments of the present disclosure.
FIGS. 11A and 11B are views each illustrating essential portions of the movement guiding unit and the pressing plate according to the embodiments of the present disclosure.
FIGS. 12A and 12B are exploded perspective views each illustrating an upper guide bar and a lower guide bar according to the embodiments of the present disclosure.
FIG. 13 is an exploded perspective view illustrating the pressing plate and a heating pad according to the embodiments of the present disclosure.
FIG. 14 is a cross-sectional view illustrating a pressing plate and a heating pad according to the embodiments of the present disclosure.
FIG. 15 is an exploded perspective view illustrating a pressing plate and a heating pad according to a third embodiment of the present disclosure.

### [Description of Embodiments]

Embodiments of the present disclosure will be described below with reference to the accompanying drawings. However, the present disclosure may be implemented in various different forms and therefore is not limited to the embodiments thereof that are described below. In order to definitely describe the embodiments of the present disclosure, a constituent element not associated with the description is omitted from the drawings, and the same constituent elements are given the same reference numeral throughout the present specification.

In addition, when a constituent element is referred to as being "connected to" one other constituent element, the constituent element may be "directly connected to" one other constituent element or may be "indirectly connected to" one other constituent element with a third constituent element member in between." Unless otherwise specified, the expression "includes a certain constituent element" means that any other constituent element may further be included, not that any other constituent element is excluded.

Throughout the present specification, the terms "over" and "under" mean being at higher and lower levels, respectively, than something, but not necessarily in the direction of gravity.

The embodiments of the present disclosure will be described in detail below with reference to the accompanying drawings.

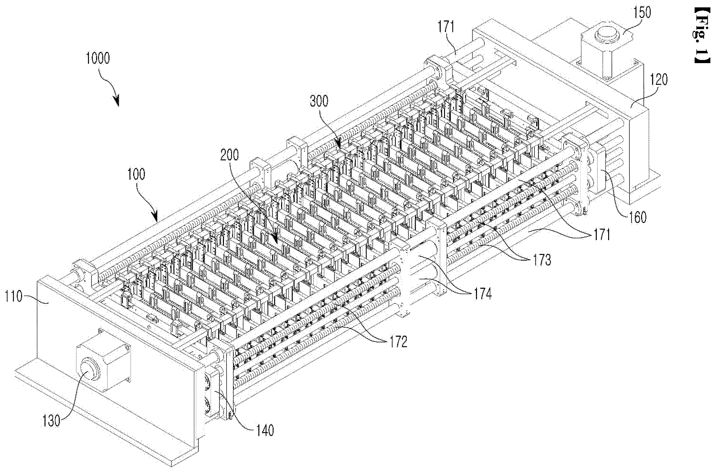

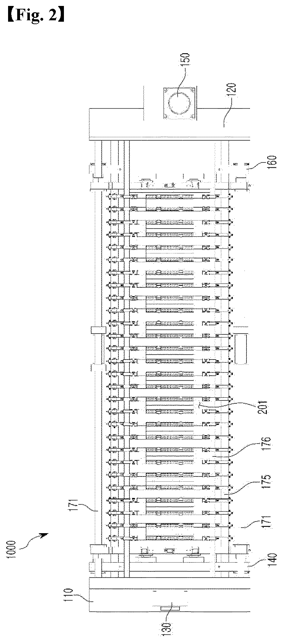

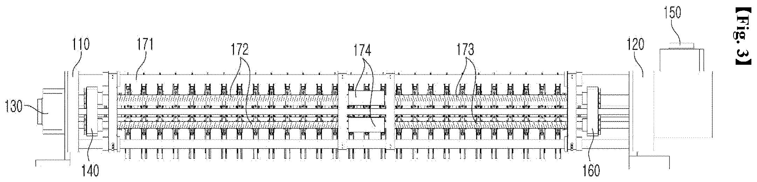

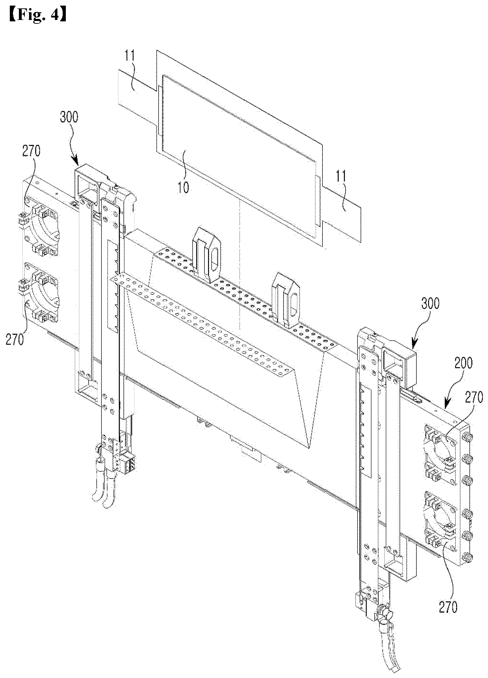

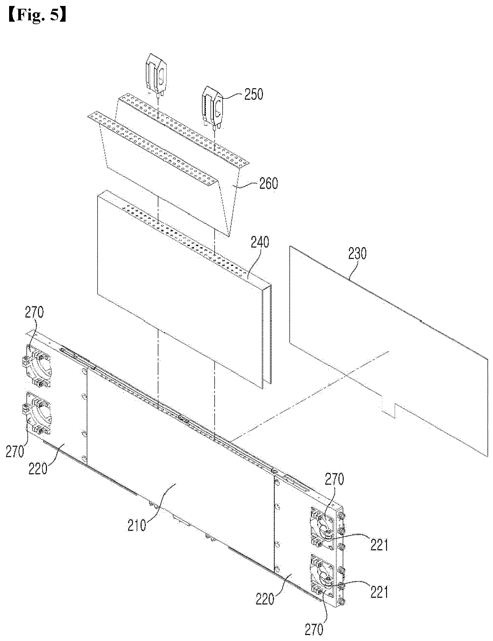

FIG. 1 is a perspective view illustrating an apparatus for charging and discharging a secondary battery according to embodiments of the present disclosure. FIG. 2 is a view illustrating the apparatus for charging and discharging a secondary battery according to the embodiments of the present disclosure, when viewed from above. FIG. 3 is a view illustrating the apparatus for charging and discharging a secondary battery according to the embodiments of the present disclosure, when viewed from front. FIG. 4 is a perspective view illustrating a cell pressing module and an electrode lead gripper module according to the embodiments of the present disclosure. FIG. 5 is an exploded perspective view illustrating the cell pressing module according to the embodiments of the present disclosure.

As illustrated in FIGS. 1 to 5, an apparatus 1000 for charging and discharging a secondary battery may include a support housing module 100, a cell pressing module 200, and an electrode lead gripper module 300.

The support housing module 100 is configured to form an entire exterior appearance of the apparatus 1000 for charging and discharging a secondary battery and to support various constituents that are included in the apparatus 1000 for charging and discharging a secondary battery.

The support housing module 100 may include a first support frame 110, a second support frame 120, a first pressing drive unit 130, a first pressing unit 140, a second pressing drive unit 150, a second pressing unit 160, a support shaft 171, a second moving screw 172, a second moving screw 173, a screw support bracket 174, a plate moving shaft 175, and a gripper moving shaft 176.

The first support frame 110 and the second support frame 120 constitute one pair, and the first support frame 110 and the second support frame 120 are arranged to be spaced a predetermined distance apart. The first support frame 110 and the second support frame 120 may be fixed to the support shaft 171 by being supported thereon.

A plurality of pressing plates 210 that press against a pouch-type battery cell 10 and a plurality of electrode lead gripper modules 300 that activate a battery cell through charging and discharging of the pouch-type battery cell 10 may be arranged between the first support frame 110 and the second support frame 120 that are arranged to be spaced apart in this manner.

Then, the first pressing drive unit 130 is fixed to the first support frame 110 by being supported thereon. The first pressing drive unit 130 may be a power source, such as a motor.

The first pressing drive unit 130 controls moving of the first pressing unit 140 that presses against the cell pressing module 200. A motive power generated from the first pressing drive unit 130 may be transferred to the first moving screw 172 through a plurality of gears (not illustrated), and thus the first moving screw 172 may be rotated.

The first pressing unit 140 is combined with the first moving screw 172 in a manner that forms a TM screw. Thus, the first pressing unit 140 may be moved along a lengthwise direction of the first moving screw 172 when the first moving screw 172 is rotated. For example, in a case where the first pressing drive unit 130 is rotated forward, the first pressing unit 140 may be moved toward the second support frame 120. Moreover, in a case where the first pressing drive unit 130 is rotated backward, the first pressing unit 140 may be moved away from the second support frame 120. A moving direction of the first pressing unit 140 may vary according to a rotational direction (the forward direction or the backward direction) of the first pressing drive unit 130.

The first moving screw 172 that guides the moving direction of the first pressing unit 140 is configured in such a manner that one end portion thereof is supported on the first support frame 110 and the other end portion thereof is rotatable in a state of being supported on the screw support bracket 174.

The second pressing drive unit 132 is fixed to the second support frame 120 by being supported thereon. The second pressing drive unit 132 may be a power source, such as a motor.

The second pressing drive unit 150 controls moving of the second pressing unit 160 that presses against the cell pressing module 200. A motive power generated from the second pressing drive unit 150 may be transferred to the second moving screw 173 through a plurality of gears (not illustrated).

The second pressing assembly 160 may be combined with the second moving screw 173 in a manner that forms a ball screw, and thus the second pressing assembly 160 may be moved along a lengthwise direction of the second moving screw 173 when the second moving screw 173 is rotated. For example, in a case where the second pressing drive unit 150 is rotated forward, the second pressing assembly 160 may be moved toward the first support frame 110. Moreover, in a case where the second pressing drive unit 150 is rotated backward, the second pressing assembly 160 may be moved away from the first support frame 110. That is, a moving direction of the second pressing assembly 160 may vary according to a rotational direction (the forward rotation or the backward direction) of the second pressing drive unit 150.

The second moving screw 173 that guides the moving direction of the second pressing assembly 160 is configured in such a manner that one end portion thereof is supported on the second support frame 120 and that the other end portion thereof is rotatable in a state of being supported on the screw support bracket 174.

For an activation operation, a plurality of the battery cells 10 picked up from a battery pick-up apparatus (not illustrated) may be inserted into battery insertion spaces 201, respectively, each of which is formed between the pressing plates 210 arranged adjacent to each other. At this point, the pressing plates 210 that are arranged adjacent to each other may be connected to each other by a slip sheet 260, and the battery cell 10 inserted into the battery insertion space 201 may be seated on the slip sheet 260.

In a case where the battery cell 10 is seated on the slip sheet 260 in this manner, the first pressing unit 140, which is combined with the first moving screw 172 in a manner that forms the TM screw, is moved at a fast speed to a predetermined reference position.

In a state where the first pressing unit 140 is moved to the predetermined reference position, the second pressing assembly 160, which is combined with the second moving screw 173 in a manner that forms the ball screw, precisely controls moving of the pressing plate 210 in such a manner that the battery cell 10 is pressed with required pressure for pressing. In this manner, the apparatus 1000 for charging and discharging a secondary battery may shorten the time taken to move the pressing plate 210, through the selective moving of the first pressing unit 140 and the second pressing assembly 160 and at the same time may precisely control the pressure for pressing that is applied to the battery cell 10.

As described above, the first pressing unit 140 is combined with the first moving screw 172 in a manner that forms the TM screw, and the second pressing assembly 160 is combined with the second moving screw 173 in a manner that forms the ball screw. Accordingly, the time taken to move the pressing plate 210 that presses against the battery cell 10 may be shortened, and adjustment of the pressure for pressing against the battery cell 10 may be controlled more precisely. That is, the first pressing unit 140 and the second pressing assembly 160 are combined with the moving screws, respectively, in such a manner as to form screws of different shapes. Accordingly, in a state where the first pressing unit 140 is first fast moved to a required reference position, the second pressing assembly 160 may then press against the battery cell 10 in a more precise manner.

A plurality of the cell pressing modules 200 may be provided between the first support frame 110 and the second support frame 120.

The cell pressing module 200 may include the pressing plate 210, a movement guiding unit 220, a heating pad 230, a protective pad 240, a pocket guide 250, and the slip sheet 260.

The pressing plate 210 is configured to press against the battery cell 10 seated on the slip sheet 260.

The movement guiding unit 220 is provided on both sides of the pressing plate 210. The movement guiding unit 220 is configured to be movable along a lengthwise direction of the plate moving shaft 175 that is connected to the first support frame 110 and the second support frame 120. That is, a movement guiding hole 221 into which the plate moving shaft 175 is inserted by passing-through is formed in the movement guiding unit 220. Thus, the movement guiding unit 220 may be moved along the lengthwise direction of the plate moving shaft 175 as the first pressing unit 140 and the second pressing assembly 160 are moved.

The pressing plate 210 is configured to be detachably attached to the movement guiding unit 220. Therefore, in a case where the pressing plate 210 needs to be maintained, an operator may simply separate the pressing plate 210 from the movement guiding unit 220.

For reference, a cell pressing module in the related art is not configured to have a movement guiding unit configured to be detachably attached to a pressing plate. A movement guiding hole into which the plate moving shaft 175 is inserted by passing-through is formed in both sides of a pressing plate in the related art. However, the pressing plate in the related art, when required to be replaced, has to be replaced in a state where all pressing plates, arranged before it, are separated from the plate moving shaft 175. Accordingly, it is difficult to perform an operation of replacing the pressing plate in the related art. In contrast, because the pressing plate 210 according to the present disclosure is configured to be detachably attached to the movement guiding unit 220, an operation of replacing the pressing plate 210 may be simply performed.

Then, the heating pad 230 is configured to heat the pressing plate 210 to a predetermined temperature. The pressing plate 210 presses against the battery cell 10 with a predetermined pressure for pressing in a state of being heated to the predetermined temperature by the heating pad 230.

The protective pad 240 is configured to prevent the pressing plate 210 from causing damage to a surface of the battery cell 10 while the pressing plate 210 presses against the battery cell 10.

The pocket guide 250 is configured to fix the slip sheet 260 and the protective pad 240 to the pressing plate 210 and at the same time to guide an insertion direction of the battery cell 10 in such a manner that the plurality of the battery cells 10 picked up from the battery pickup apparatus are stably inserted into the battery insertion spaces 201, respectively.

The electrode lead gripper module 300 is configured to be movable along a width direction of the cell pressing module 200 in a state of being inserted into the cell pressing module 200. For example, the electrode lead gripper module 300 is configured to be moved selectively along the width direction of the cell pressing module 200 according to a size of the battery cell 10 and to be in a pressurized manner brought into contact with an electrode lead 11 provided on the battery cell 10.

The electrode lead gripper modules 300 constituting one pair may be provided on both sides, respectively, of the cell pressing module 200.

In a state of being brought into contact with the electrode lead 11 by pressure in such a manner as to make an electric connection, the electrode lead gripper module 300 recognizes whether the battery cell 10 is charged or discharged and whether or not the battery cell 10 is defective.

In this manner, the apparatus 1000 for charging and discharging a secondary battery is configured to charge and discharge the battery cell 10 in a state where the pressing plate 210 presses against the battery cell 10. Accordingly, the apparatus 1000 for charging and discharging a secondary battery prevents occurrence of a swelling phenomenon where the battery cell 10 is swelled due to expansion of the battery cell 10 or to occurrence of gas and precisely recognizes whether or not the battery cell 10 is defective.

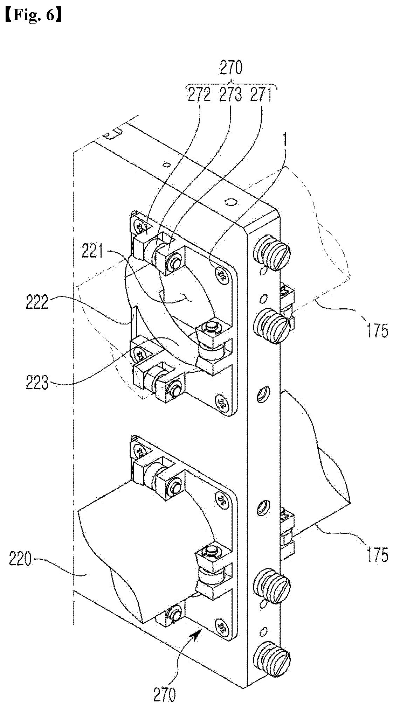

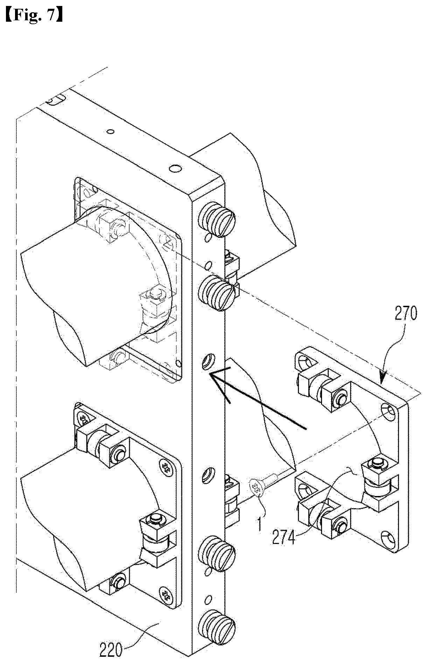

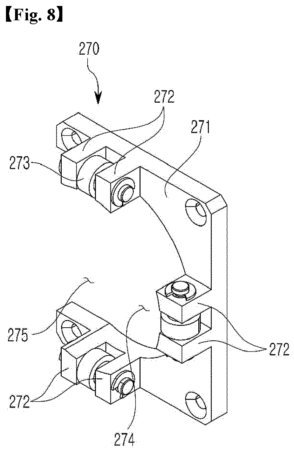

FIG. 6 is a view illustrating a roller assembly 270 combined with the movement guiding unit 220 according to the embodiments of the present disclosure. FIG. 7 is an exploded perspective view illustrating the roller assembly 270 separated from the movement guiding unit 220 according to the embodiments of the present disclosure. FIG. 8 is a perspective view illustrating the roller assembly 270 according to the embodiments of the present disclosure.

As illustrated in FIGS. 6 to 8, the cell pressing module 200 may include the roller assembly 270. According to the embodiments of the present disclosure, although the roller assembly 270 is damaged, only the roller assembly 270 may be advantageously separated for replacement without the need to separate the entire cell pressing module 200 from the plate moving shaft 175.

The roller assembly 270 may be combined with each of the one side and the other side of the movement guiding unit 220. The roller assembly 270 is configured to guide smooth moving of the movement guiding unit 220 along the plate moving shaft 175. That is, the roller assembly 270 is configured to guide the smooth moving of the movement guiding unit 220 while the pressing plate 210 presses against the battery cell 10.

The roller assembly 270 may include a roller body 271, a roller support portion 272, and a movement roller 273.

The roller body 271 forms the exterior appearance of the roller assembly 270.

The roller body 271 may be fixed to the assembly insertion groove 222 formed on the one-side and other-side surfaces of the movement guiding unit 220 by being inserted thereinto.

A guide hole 274 into which the plate moving shaft 175 is inserted by passing-through is formed in the roller body 271. The plate moving shaft 175 may be inserted into the movement guiding hole 221 and the guide hole 274 by passing-through.

The roller support portion 272 protrudes from the roller body 271. A plurality of the roller support portions 272 are provided and are arranged to be spaced a predetermined distance apart.

For example, the roller support portion 272 may be arranged to be positioned at a 90-degree angle with respect to the center point of the guide hole 274. The roller support portion 272 is not necessarily limited to a 90-degree angle and may be arranged to be positioned at a different angle with respect to the center point of the guide hole 274.

The movement roller 273 may be combined with the roller support portion 272. The movement roller 273 guides the smooth moving of the movement guiding unit 220 in a state of coming into contact with an external surface of the plate moving shaft 175 that is inserted into the guide hole 274 by passing-through.

An opening 275 is formed in the roller body 271. The guide hole 274 is exposed to the outside through the opening 275. That is, the guide hole 274 formed in the roller body 271 is configured to be exposed to the outside through the opening 275 without being completely closed.

In this manner, the roller assembly 270 combined with the movement guiding unit 220 is configured to be separable from the movement guiding unit 220 even in a state where the plate moving shaft 175 is inserted into the movement guiding hole 221 by passing-through. In other words, the formation of the opening 275 in the roller assembly 270 makes the roller assembly 270 independently separable from the movement guiding unit 220 even in the state where the plate moving shaft 175 is inserted into the movement guiding hole 221 by passing-through. The opening 275 is formed in such a manner as to have a width that corresponds to an outer diameter of the plate moving shaft 175. Thus, the roller assembly 270 may be simply separated from the movement guiding unit 220.

Accordingly, for example, in a case where the roller assembly 270 guiding the smooth moving of the movement guiding unit 220 is damaged, the operator may simply separate the damaged roller assembly 270 from the movement guiding unit 220 for replacement thereof. In this manner, the operation of replacing the roller assembly 270 may be simply performed.

The movement guiding unit 220 includes a division combination portion 223.

The division combination portion 223 forms an assembly insertion groove 222 on each of the one-side and other-side surfaces of the movement guiding unit 220. That is, the division combination portion 223 makes a division into the assembly insertion grooves 222 into which two roller assemblies 270, respectively, are inserted.

The division combination portion 223 supports the roller assembly 270 that is inserted into the assembly insertion groove 222. The roller assembly 270 inserted into the assembly insertion groove 222 may be combined with the division combination portion 223 or separated from the division combination portion 223 through a combination member 1, such as a bolt. That is, the roller assembly 270 is configured to be detachably attached to the division combination portion 223.

The division combination portion 223 supports the roller assembly 270 and, at the same time, forms the movement guiding hole 221 through which the plate moving shaft 175 passes. Therefore, the movement guiding unit 220 combined with the pressing plate 210 may be moved along the lengthwise direction of the plate moving shaft 175.

At this point, it is desired that the roller assembly 270 is combined with the assembly insertion groove 222 by being inserted thereinto, in a state where the opening 275 formed in the roller assembly 270 is positioned adjacent to the pressing plate 210.

The reason for this is to simply replace the damaged roller assembly 270 when the damaged roller assembly 270 needs to be replaced in a state where a plurality of the pressing plates 210 are arranged to be spaced apart.

Specifically, when replacing the damaged roller assembly 270, the operator only needs to separate the roller assembly 270 from the division combination portion 223 and then to remove the separated roller assembly 270 from the plate moving shaft 175. Thus, the operation of separating the roller assembly 270 may be simply performed.

In other words, since the roller assembly 270 is combined with the movement guiding unit 220 in the state where the opening 275 is positioned adjacent to the pressing plate 210, when separating the roller assembly 270, the roller assembly 270 may be simply separated in the direction opposite to the pressing plate 210 and that is outward from the center of the pressing plate 210. That is, the roller assembly 270 may be separated from the plate moving shaft 175 without being stuck on the plate moving shaft 175. Conversely, even in a case where the roller assembly 270 is combined with the division combination portion 223, a process of combining the roller assembly 270 may be simply performed.

In this manner, the roller assembly 270 is configured to be detachably attached to the division combination portion 223. Thus, although the roller assembly 270 is damaged, only the roller assembly 270 may be advantageously replaced in a simple way without the need to separate the entire pressing plate 210 from the plate moving shaft 175.

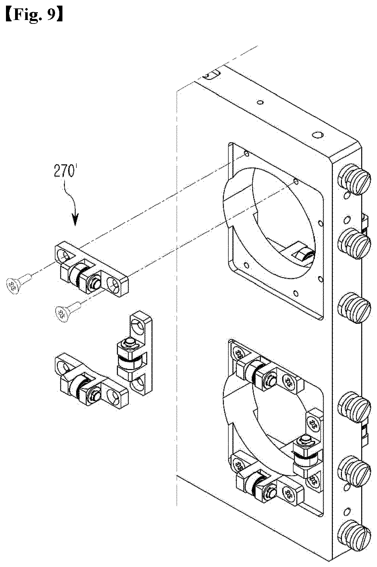

FIG. 9 is an exploded perspective view illustrating the movement guiding unit and a roller assembly according to embodiments of the present disclosure.

As illustrated in FIG. 9, a difference of the roller assembly 270' according to the embodiments from the above-described integration-type roller assembly 270 according to the embodiments of the present disclosure is that the three roller assemblies 270' resulting from division are configured to be individually combined with the one-side and other-side surfaces of the movement guiding unit 220.

In this manner, the integration-type roller assembly 270 that guides the moving of the movement guiding unit 220 along the lengthwise direction of the plate moving shaft 175 may be provided according to the embodiments of the present disclosure, and the roller assemblies 270' resulting from division may also be individually provided according to the embodiments of the present disclosure. The roller assembly may be configured in various shapes.

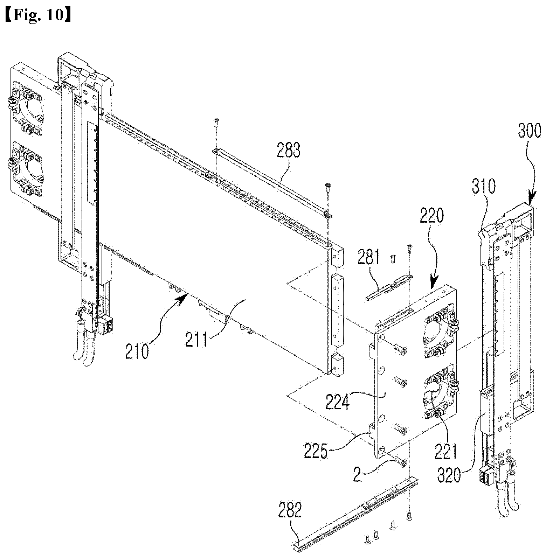

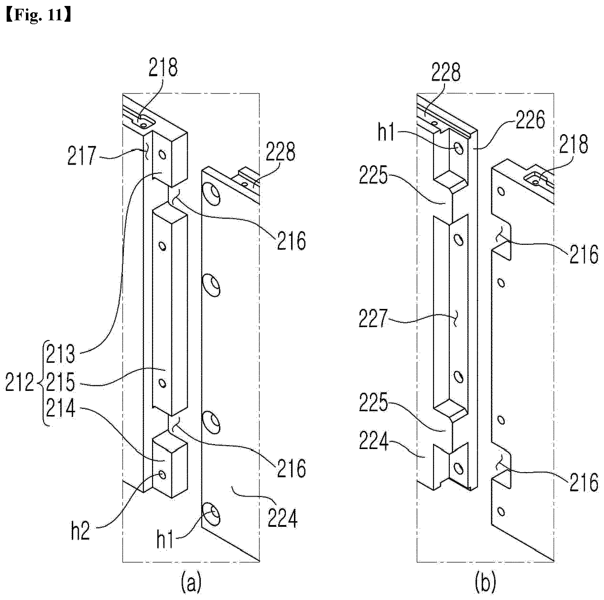

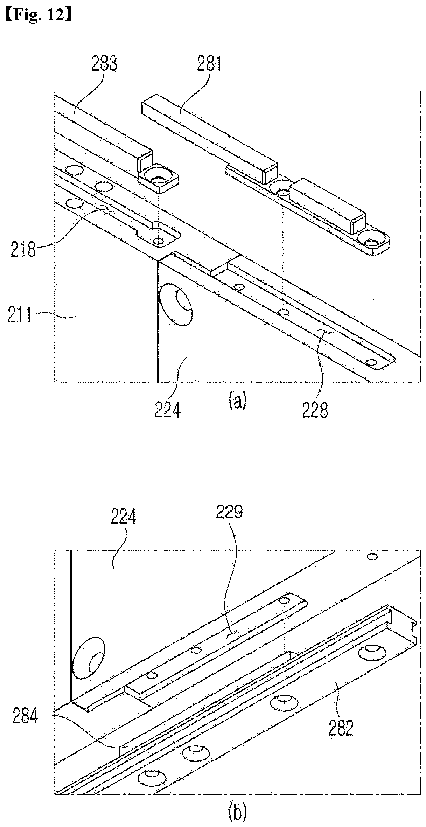

FIG. 10 is an exploded perspective view illustrating the movement guiding unit 220 and the pressing plate 210 according to the embodiments of the present disclosure. FIGS. 11A and 11B are views each illustrating essential portions of the movement guiding unit 220 and the pressing plate 210 according to the embodiments of the present disclosure. FIG. 11A is a view illustrating essential portions of the movement guiding unit 220 and the pressing plate 210 according to the embodiments of the present disclosure, when viewed from one side. FIG. 11B is a view illustrating essential portions of the movement guiding unit 220 and the pressing plate 210 according to the embodiments of the present disclosure, when viewed from the other side. FIGS. 12A and 12B are exploded perspective views each illustrating an upper guide bar 281 and a lower guide bar 282 according to the embodiments of the present disclosure.

As illustrated in FIGS. 10 to 12, the pressing plate 210 is configured to be detachably attached to the movement guiding unit 220. Accordingly, although the pressing plate 210 is damaged, only the pressing plate 210 may be advantageously separated from the movement guiding unit 220 for replacement without the need to separate the entire cell pressing module 200 including the pressing plate 210 and the movement guiding unit 220 from the plate moving shaft 175.

The pressing plate 210 may be combined with the movement guiding unit 220 with a fastening member 2, such as a bolt. For reference and for convenience in description, FIG. 6 illustrates that the pressing plate 210 and the movement guiding unit 220 are separable. When the pressing plate 210 is actually separated from the movement guiding unit 220, the pressing plate 210 may be separated from the movement guiding unit 220 in a state where the movement guiding unit 220 is fixed to the plate moving shaft 175, thereby being supported thereon.

The pressing plate 210 may include a pressing body 211 and an insertion coupling portion 212.

The pressing body 211 forms the exterior appearance of the pressing plate 210. The pressing body 211 is configured to press against the battery cell 10.

The insertion coupling portions 212 are configured to protrude from both-side surfaces, respectively, of the pressing body 211. The insertion coupling portions 212 that protrude from one-side and other-side surfaces, respectively, of the pressing body 211 are configured to have the same shape.

The insertion coupling portion 212 is combined with the movement guiding unit 220 in a state of being inserted into an insertion space 227 formed in the movement guiding unit 220.

The insertion coupling portion 212 may include an upper insertion protrusion 213, a lower insertion protrusion 214, and an intermediary insertion protrusion 215.

The upper insertion protrusion 213 is provided on an upper portion of the pressing body 211.

A shape of the lower insertion protrusion 214 corresponds to that of the upper insertion protrusion 213, and the lower insertion protrusion 214 is provided on a lower portion of the pressing body 211.

The intermediary insertion protrusion 215 is provided between the upper insertion protrusion 213 and the lower insertion protrusion 214. The intermediary insertion protrusion 215 is arranged to be spaced apart from the upper insertion protrusion 213 and is also arranged to be spaced apart from the lower insertion protrusion 214.

In this manner, the upper insertion protrusion 213, the lower insertion protrusion 214, and the intermediary insertion protrusion 215 are arranged to be spaced from each other, and form an assembly insertion groove 216 into which a support protrusion 225 provided on the movement guiding unit 220 is inserted.

The pressing body 211 is formed in such a manner as to have a greater thickness than the upper insertion protrusion 213, the lower insertion protrusion 214, and the intermediary insertion protrusion 215. The protruding of the upper insertion protrusion 213, the lower insertion protrusion 214, and the intermediary insertion protrusion 215 from both-side surfaces of the pressing body 211 may form a fastening insertion groove 217 into which a fastening extension portion 226 provided on the movement guiding unit 220 is inserted.

The movement guiding unit 220 may include a moving body 224, the support protrusion 225, and the fastening extension portion 226.

The moving body 224 forms the exterior appearance of the movement guiding unit 220. The movement guiding hole 221 is formed in the moving body 224, and the movement guiding unit 220 may be moved along the plate moving shaft 175 inserted into the movement guiding hole 221.

The insertion space 227 into which the insertion coupling portion 212 is inserted is formed in an internal surface of the moving body 224. The insertion space 227 may be formed by the support protrusion 225 protruding from the internal surface of the moving body 224.

The insertion space 227 is configured to correspond to the insertion coupling portion 212. The insertion coupling portion 212 and the insertion space 227 have male and female shapes, respectively, and the insertion coupling portion 212 may be combined with the insertion space 227 by being inserted thereinto.

The support protrusion 225 protrudes from the moving body 224. The support protrusions 225 constitute one pair in a state of being arranged to be spaced a predetermined distance.

The support protrusion 225 and the assembly insertion groove 216 have male and female shapes, respectively, and the support protrusion 225 may be combined with the assembly insertion groove 216 by being inserted thereinto.

In this manner, the insertion coupling portion 212 is provided on the pressing plate 210, and the support protrusion 225 is provided on the movement guiding unit 220. Thus, the pressing plate 210 and the movement guiding unit 220 may be firmly combined with each other in a fitting-together manner.

The fastening extension portion 226 is configured to extend from the moving body 224 and to be inserted into the fastening insertion groove 217. A first fastening hole h1 is formed in the fastening extension portion 226, and a second fastening hole h2 is formed in the insertion coupling portion 212. A fastening member 2 is inserted into the first fastening hole h1 and the second fastening hole h2 by passing-through, thereby combining the pressing plate 210 and the movement guiding unit 220 with each other.

The cell pressing module 200 may include an upper guide bar 281, a lower guide bar 282, and a connection guide bar 283.

The upper guide bar 281 is combined with an upper fixation groove 228 by being inserted thereinto. The upper fixation groove is formed in an upper portion of the movement guiding unit 220. The upper guide bar 281 is configured to guide moving of an upper fixation block 310 provided on the electrode lead gripper module 300.

One end portion of the upper guide bar 281 is combined with the movement guiding unit 220 through the combination member, such as a bolt. The other end portion of the upper guide bar 281 supports an upper surface of the pressing plate 210.

The upper guide bar 281 is arranged adjacent to the connection guide bar 283 that is combined with a guide fixation groove 218 by being inserted thereinto. The guide fixation groove 218 is formed in an upper portion of the pressing plate 210. Accordingly, the upper fixation block 310 may be moved along the upper guide bar 281 and the connection guide bar 283 that are arranged adjacent to each other.

The lower guide bar 282 is combined with a lower fixation groove 229 by being inserted thereinto. The lower fixation groove 229 is formed in a lower portion of the movement guiding unit 220. A fixation member 284 that is inserted into the lower fixation groove 229 is provided on the lower guide bar 282. The lower guide bar 282 may be firmly combined with the movement guiding unit 220. The lower guide bar 282 is configured to guide moving of a lower fixation block 320 provided on the electrode lead gripper module 300.

One end portion of the lower guide bar 282, like that of the upper guide bar 281, is combined with the movement guiding unit 220 through a combination member, such as a bolt. The other end portion of the lower guide bar 282 supports a lower surface of the pressing plate 210. The upper guide bar 281 and the lower guide bar 282 are configured to guide moving of the electrode lead gripper module 300 and at the same time to stably support upper and lower portions, respectively, of the pressing plate 210.

A technical feature (a first feature) of the roller assembly 270 that is described with reference to FIGS. 6 to 9, and a technical structure (a second feature) of a disassemble structure between the pressing plate 210 and the movement guiding unit 220 that are described with reference to FIGS. 10 to 12B may be realized individually or in combination. That is, the first feature, the second feature, and a combination of the first feature and the second feature are realized according to the first and embodiments of the present disclosure.

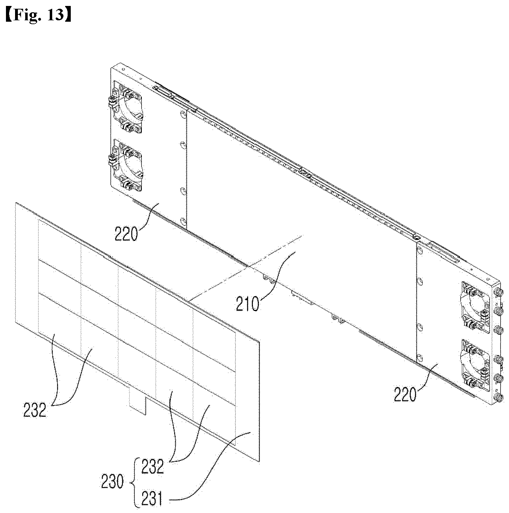

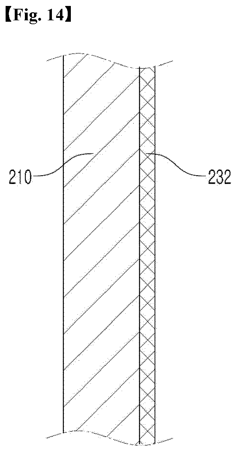

FIG. 13 is an exploded perspective view illustrating the pressing plate 210 and a heating pad 230 according to the embodiments of the present disclosure. FIG. 14 is a cross-sectional view illustrating the pressing plate 210 and the heating pad 230 according to the embodiments of the present disclosure.

As illustrated in FIGS. 13 and 14, the heating pad 230 provided on the cell pressing module 200 is combined with one surface of the pressing plate 210. The heating pad 230 is configured to heat the pressing plate 210 to a predetermined temperature.

The heating pad 230 may include a pad support member 231 and a heating member 232. The pad support member 231 is configured to support a plurality of the heating members 232 that are provided inside the pad support member 231. The pad support member 231 supports the heating member 232 and, at the same time, is electrically connected to the heating member 232. Thus, electric power that is transferred to the pad support member 231 may be supplied to the heating member 232.

In this manner, the heating pad 230 that is combined with one surface of the pressing plate 210 is configured in such a manner that a combination surface thereof corresponds to a combination surface of the pressing plate 210. That is, the pressing plate 210 and the heating pad 230 are configured in such a manner that the combination surfaces thereof correspond to each other.

In this manner, the pressing plate 210 presses against the battery cell 10 with a predetermined pressure in a state of being heated by the heating pad 230 to the predetermined temperature.

The heating pad 230 may be made from an epoxy plate in which a heating line is provided. The heating pad 230 made from the epoxy plate has an excellent combining force when combined with the pressing plate 210 and thus may be firmly combined with the pressing plate 210. In addition, the heating pad 230 made from the epoxy plate has high thermal conductivity at the combination surface. Thus, heat generated from the heating pad 230 may be effectively transferred to the pressing plate 210.

In this manner, the heating pad 230 that heats the pressing plate 210 may be heated to, for example, a temperature of 130°C or below. It is more desired that the heating pad 230 heats the pressing plate 210 to a range of 110 to 130°C. However, the temperature to which the heating pad 230 heats the pressing plate 210 is not necessarily limited to 130°C or lower. Of course, the pressing plate 210 may be heated to a temperature of above 130°C.

The cell pressing module 200 according to the present invention has a structure different from a structure where a heating pad is provided between two pressing plates in the related art. That is, the heating pad 230 is provided on only one surface of the pressing plate 210. Thus, an operation of replacing the pressing plate 210 or the heating pad 230 may be simply performed. That is, the heating pad 230 and the pressing plate 210 are simply separated from each other. Thus, for example, in a case where the heating pad 230 needs to be replaced, the operator may simply replace the heating pad 230.

The cell pressing module in which the heating pad is inserted between the two pressing plates in the related art is designated in such a manner as to have a predetermined thickness. Due to the predetermined thickness of the cell pressing module, the pressing plates that are provided to both sides, respectively, of the heating pad result in having a small thickness. Therefore, the pressing plate that has a small thickness may be warped while the pressing plate presses against the battery cell 10. In this manner, in a case where the pressing plate is warped, there occurs a problem in that the warped pressing plate does not uniformly press against a pressing surface of the battery cell 10.

In order to solve this problem, the pressing plates that are provided to both sides, respectively, of the heating pad may be formed in such a manner as to have a predetermined thickness or greater. However, in this case, there occurs a problem in that the overall size of the cell pressing module is increased.

In contrast, in the cell pressing module 200 according to the present disclosure, the heating pad 230 is provided on only one surface of the pressing plate 210. Accordingly, the pressing plate 210 may have a predetermined thickness or greater. In this case, the pressing plate 210 may be prevented from being warped while the pressing plate 210 presses against the battery cell 10. In addition, since the heating pad 230 is provided on only one surface of the pressing plate 210, a pressing surface of the pressing plate 210 that presses against the battery cell 10 may have exact parallelism.

The protective pad 240 to be provided on the cell pressing module 200 is configured to protect the pressing plate 210 and the heating pad 230 from the outside.

For example, a cover insertion space which is "c "-shaped and into which the pressing plate 210 and the heating pad 230 are inserted may be formed in the protective pad 240, and the pressing plate 210 and the heating pad 230 may be covered with the protective pad 240.

The protective pad 240 may be formed of, for example, a silicone material. The protective pad 240 made of a silicon material is configured to prevent a surface of the battery cell 10 from being damaged due to the pressing plate 210 and the heating pad 230 while the pressing plate 210 presses against the battery cell 10.

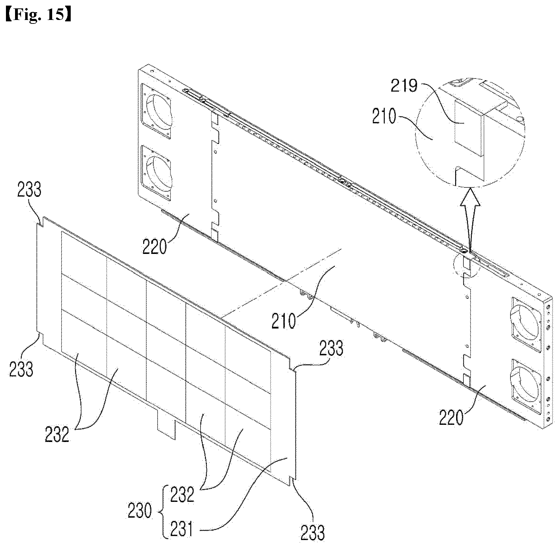

FIG. 15 is an exploded perspective view illustrating a pressing plate and a heating pad according to a third embodiment of the present disclosure.

As illustrated in FIG. 15, a combination-position protrusion 219 is formed to protrude from a combination surface of the pressing plate 210 with which the heating pad 230 is combined. A combination-guide fixation jaw 233 that corresponds to the combination-position protrusion 219 is provided on an edge portion of the pad support member 231 provided on the heating pad 230.

When the heating pad 230 and the pressing plate 210 are combined with each other, the combination-position protrusion 219 and the combination-guide fixation jaw 233 are combined with each other in a state where they are engaged with each other. In this manner, the combination-position protrusion 219 and the combination-guide fixation jaw 233 are configured in such a manner as to guide the heating pad 230 and the pressing plate 210 to a combination position when the heating pad 230 and the pressing plate 210 are combined with each other.

It is desired that the combination-position protrusion 219 is configured in such a manner that a distance over which the combination-position protrusion 219 protrudes is the same as a thickness of the heating pad 230. The reason for this is to flatten upper surfaces of the heating pad 230 and the combination-position protrusion 219 with respect to each other in a state where the heating pad 230 is combined with the pressing plate 210.

The desired embodiments of the present disclosure that are described above are exemplary embodiments. Therefore, the scope of the present disclosure is not limited to the descriptions of the desired embodiments.

The desired embodiments of the present disclosure are described above in an exemplary manner. It would be understood by a person of ordinary skill in the art to which the present disclosure pertains that the desired embodiments of the present disclosure are readily modified into specific forms without changing the technical idea of the present disclosure and essential features thereof. Therefore, in every aspect, the desired embodiments described above should be understood as being exemplary and non-restrictive. For example, the constituent elements that are described as having their respective single forms may be implemented in a distributed manner, and likewise, the constituent elements that are described as being distributed may be implemented in a combined manner.

The scope of the present disclosure is defined by the following claims, and all modifications or alterations that are derived from the meaning of claim language and the scope of the claims and from equivalents of the claims should be construed as falling within the scope of the present disclosure.

## Claims

1. A cell pressing module comprising:
a pressing plate pressing against a battery cell;
a movement guiding unit in which a movement guiding hole into which a plate moving shaft is inserted by passing-through is formed, the movement guiding unit being combined with both sides of the pressing plate; and
a roller assembly on which a movement roller coming into contact with the plate moving shaft is provided, the roller assembly being combined with one-side and other-side surfaces of the movement guiding unit.

2. The cell pressing module of claim 1, wherein the roller assembly comprises:
a roller body in which a guide hole into which the plate moving shaft is inserted by passing-through is formed, the roller body forming the exterior appearance of the roller assembly;
a roller support portion protruding, over a predetermined distance, from the roller body; and
a movement roller coming into contact with the plate moving shaft, the movement roller being combined with the roller support portion, and
wherein an opening through which the guide hole is exposed to the outside is formed in the roller body.

3. The cell pressing module of claim 2, wherein the opening is configured to have a width corresponding to an outer diameter of the plate moving shaft.

4. The cell pressing module of claim 2, wherein the movement guiding unit includes a division combination portion with which the roller assembly is combined for support,
wherein the division combination portion is configured in such a manner as to form an assembly insertion groove into which the roller assembly is inserted, and
wherein the roller assembly inserted into the assembly insertion groove formed on one-side and other-side surfaces of the movement guiding unit is detachably attached, by a combination member, to the division combination portion.

5. The cell pressing module of claim 4, wherein the roller assembly is combined with the division combination portion in such a manner that the opening is positioned adjacent to the pressing plate, and
wherein the roller assembly is configured to be separated from the plate moving shaft through the opening in a state where the plate moving shaft is inserted into the movement guiding hole.

6. The cell pressing module of claim 2, wherein the movement roller is arranged to be positioned at a 90-degree angle with respect to the center point of the guide hole.

7. The cell pressing module of claim 1, wherein the pressing plate is configured to be detachably attached to the movement guiding unit.

8. The cell pressing module of claim 7, wherein the pressing plate comprises:
a pressing body pressing against the battery cell; and
insertion coupling portions protruding from both-side surfaces, respectively, of the pressing body, each of the insertion coupling portions being combined with an insertion space, formed in the movement guiding unit, by being inserted thereinto,
wherein the insertion coupling portion comprises:
an upper insertion protrusion provided on an upper portion of the pressing body;
a lower insertion protrusion provided on a lower portion of the pressing body; and
an intermediary insertion protrusion provided between the upper insertion protrusion and the lower insertion protrusion, and
wherein the upper insertion protrusion, the lower insertion protrusion, and the intermediary insertion protrusion are configured to be spaced from each other and to form an assembly insertion groove.

9. The cell pressing module of claim 8, wherein the pressing body is configured to have a greater thickness than the upper insertion protrusion, the lower insertion protrusion, and the intermediary insertion protrusion in order to form a fastening insertion groove.

10. The cell pressing module of claim 9, wherein the movement guiding unit comprises:
a moving body, an insertion space into which the insertion coupling portion is inserted being formed in an internal surface of the moving body;
a pair of support protrusions spaced a predetermined distance apart, the pair of support protrusions protruding from an internal surface of the moving body and being inserted into the assembly insertion groove; and
a fastening extension portion extending from the moving body and being inserted into the fastening insertion groove,
wherein a first fastening hole is formed in the fastening extension portion, a second fastening hole is formed in the insertion coupling portion, and the fastening member is inserted into the first fastening hole and the second fastening hole by passing-through, and thus combines the pressing plate and the movement guiding unit with each other.

11. The cell pressing module of claim 8, further comprising:
an upper guide bar being combined with an upper fixation groove by being inserted thereinto, the upper fixation groove being formed in an upper portion of the movement guiding unit, and the upper guide bar guiding moving of an upper fixation block provided on an electrode lead gripper module; and
a lower guide bar being combined with a lower fixation groove by being inserted thereinto, the lower fixation groove being formed in a lower portion of the movement guiding unit, and the lower guide bar guiding moving of a lower fixation block provided on the electrode lead gripper module.

12. The cell pressing module of claim 11, further comprising:
a connection guide bar being combined with a guide fixation groove by being inserted thereinto, the guide fixation groove being formed in an upper portion of the pressing plate, and the connection guide bar guiding moving of the upper fixation block,
wherein the connection guide bar and the upper guide bar are arranged adjacent to each other, and thus guide the moving of the upper fixation block.
